Europäisches Patentamt

European Patent Office

Office européen des brevets

(19)

(11) Veröffentlichungsnummer : **0 160 820**
**B1**

(12) EUROPÄISCHE PATENTSCHRIFT

(45) Veröffentlichungstag der Patentschrift :
22.02.89

(51) Int. Cl.⁴ : **B 23 K   9/02**

(21) Anmeldenummer : 85103517.0

(22) Anmeldetag : 25.03.85

(54) Brenner zum WIG-Schweissen.

(30) Priorität : 06.04.84 DE 3413102

(43) Veröffentlichungstag der Anmeldung :
13.11.85 Patentblatt 85/46

(45) Bekanntmachung des Hinweises auf die Patenterteilung : 22.02.89 Patentblatt 89/08

(84) Benannte Vertragsstaaten :
AT BE CH DE FR GB IT LI NL SE

(56) Entgegenhaltungen :
EP—A— 0 025 989
AT—B—   286 750
DE—A— 3 220 242
US—A— 4 346 279

(73) Patentinhaber : Siemens Aktiengesellschaft Berlin
und München
Wittelsbacherplatz 2
D-8000 München 2 (DE)

(72) Erfinder : Engelhard, Gerhard, Dipl.-Ing.
Gleiwitzer Strasse 19
D-8520 Erlangen (DE)
Erfinder : Peilkofer, Dieter, Dipl.-Ing.
Sonnenstrasse 52
D-8522 Herzogenaurach (DE)
Erfinder : Böhm, Jürgen
Görlitzer Strasse 9
D-8520 Erlangen (DE)
Erfinder : Förner, Siegfried
Leipziger Strasse 59
D-8520 Erlangen (DE)

## Beschreibung

Die Erfindung betrifft einen Brenner zum WIG-Schweißen einer Schweißnaht mit einer stabförmigen Wolframelektrode, die eine der Schweißnaht zugekehrte Elektrodenspitze hat, mit einer mit der Elektrode verbundenen Kühlmittelleitung in der Form von jeweils zwei nebeneinanderliegenden Kanälen als Zu- und Ableitung, wobei jeweils ein Paar auf gegenüberliegenden Seiten der Elektrode angeordnet ist, mit einer Schutzgaszuführung, wobei an der der Elektrode abgekehrten Seite der Kühlmittelkanäle die Schutzgaszuführungsleitungen isoliert befestigt sind, und mit einer Isolierkappe, die über der Elektrodenspitze zugekehrte Enden der Kühlmittelkanäle greift und durch die die Elektrodenspitze hindurchragt.

Ein derartiger Brenner ist aus der US-Patentschrift 4 346 279 bekannt. Er ist einsetzbar, um Schweißungen in Spalten vorzunehmen. Dabei ist durch den Durchmesser der Wolframelektrode die minimale Breite eines Spaltes festgelegt, in dem noch Schweißarbeiten vorgenommen werden können. Eine beliebige Verkleinerung des Elektrodendurchmessers ist aber dadurch begrenzt, daß mit abnehmendem Durchmesser die Temperatur der Elektrode steigen muß, damit eine Schweißung überhaupt durchführbar ist. Eine Erhöhung der Temperatur zieht jedoch Probleme bei der Kühlung der Elektrode nach sich.

In der US-PS 4 346 279 sind weder Abmessungen des Schweißgerätes offenbart noch ist der Maßstab der Figuren bekannt. Aus der Anordnung der Mündungen der Schutzgaszuführungsleitungen bezüglich der Elektrodenspitze und aus der Verwendung von Zerstäubern ist aber für einen Fachmann zu entnehmen, daß die Temperatur der Elektrode relativ niedrig sein muß. Eine solche niedrige Temperatur stellt ein ausreichend gutes Schweißergebnis nur dann sicher, falls der Durchmesser der Elektrodenspitze vergleichsweise groß ist und beispielsweise 10 mm beträgt. Bei derart niedriger Temperatur der Elektrode reicht es aus, wenn die Kühlmittelleitungen verhältnismäßig weit von der Elektrodenspitze entfernt und von dieser durch eine dicke Isolierkappe getrennt enden.

Mit der bekannten Einrichtung sind Schweißarbeiten in sehr engen Spalten, deren Weiten nur wenige Millimeter betragen, nicht durchführbar. Schweißarbeiten in derartigen engen Spalten müssen aber beispielsweise beim Aufbau des Rohrleitungsnetzes in einem Kraftwerk sehr häufig ausgeführt werden.

Der Erfindung lag die Aufgabe zugrunde, Brenner zum Schweißen in einem Spalt, die als solche bekannt sind, soweit zu verbessern, daß sie auch für sehr enge Spalte, deren Weite nur wenige Millimeter beträgt, zu verwenden sind.

Ein Schweißbrenner mit einer Wolframelektrode ist auch aus der US-Patentschrift 3 076 085 bekannt. Der Durchmesser der Elektrode dieses Brenners beträgt mindestens ein inch. Der bekannte Brenner ist also für sehr enge Spalten, in denen gemäß der gestellten Aufgabe geschweißt werden soll, überhaupt nicht ausgelegt.

Aus der DE-OS 32 20 242 ist eine schwenkbare Elektrode bekannt. Eine solche Einrichtung ist unabhängig von der Weite des Spaltes einsetzbar. Der genannte Winkel zwischen der Achse des Schweißgerätes und dem Schweißkopf, der zwischen 3° und 15° liegt, sowie die Anordnung der Kühlmittelleitungen, deren Mündungen am Schweißkopf vorbei ausgerichtet sind, zeigen, daß der bekannte Schweißbrenner für sehr enge Spalten mit Weiten von wenigen Millimetern nicht auszulegen ist.

Die Aufgabe, einen Brenner zum WIG-Schweißen zu konstruieren, der grade für sehr enge Spalten, deren Weite beispielswelse 5 mm betragen kann, geeignet ist, wird erfindungsgemäß dadurch gelöst, daß die Wolframelektrode 2 bis 4 mm dick ist, und daß zwei Kanäle als Zuleitung und Ableitung U-förmig miteinander verbunden eine erste Kühlmittelleitung bildend auf einer Seite der Wolframelektrode bis an die Elektrodenspitze herangeführt angeordnet sind, daß zwei weitere Kanäle als Zuleitung und Ableitung U-förmig miteinander verbunden eine zweite Kühlmittelleitung bildend in einer von der ersten Kühlmittelleitung und der Wolframelektrode aufgespannten Ebene auf der gegenüberliegenden Seite der Wolframelektrode bis an die Elektrodenspitze herangeführt angeordnet sind, und daß diese Kombination aus Wolframelektrode und Kühlmittelleitungen eine flache Gestalt hat mit einer Breite von etwa 5 mm.

Die dünne Wolframelektrode ist in sehr enge Spalten einführbar. Durch die erfindungsgemäße Anordnung der Kühlkanäle ist eine so gute Kühlung der dünnen Elektrode gewährleistet, daß ohne Überhitzungsgefahr die Temperatur der Elektrode auf einem hohen Niveau gehalten werden kann. Diese hohe Temperatur macht Verschweißungen mit der relativ dünnen Elektrode erst möglich. Darüber hinaus ist durch die Anordnung der U-förmigen Kühlmittelleitungen in einer Ebene mit der Wolframelektrode und durch die Abmessungen der Kombination aus Elektrode und Kühlmittelleitungen erst gewährleistet, daß die Elektrodenspitze zusammen mit den ihr zugeordneten Abschnitten der Kühlmittelleitungen, also unter Kühlung in einen engen Spalt einführbar ist. Die Kombination aus Elektrode und Kühlmittelleitungen ist nämlich nicht breiter als die Elektrode selbst.

Mit dem erfindungsgemäßen Brenner wird der Vorteil erzielt, daß in sehr engen Spalten Verschweißungen schnell und zuverlässig vorzunehmen sind, da eine Kühlung der Elektrode im Spalt gewährleistet ist.

Den Schutzgaszuführungsleitungen des Brenners sind beispielsweise eigene flache Kühlmittelleitungen zugeordnet. Diese liegen mit den Kühlmittelkanälen der Elektrode in einer Ebene. Bei dieser Bauweise wird die Aufheizung des Schutzgases verringert. Ein bedingt durch den engen Spalt und die hohe Temperatur der Elektrode zu erwartender starker Wärmestau in den Schutzgasleitungen wird verhindert. Unter allen Betriebsbedingungen wird ein gleichmäßiger Gasmantel mit laminarer Strömung erreicht.

Der Brenner zum WIG-Schweißen kann mit einer Schweißdrahtzuführung ausgestattet sein. Diese ist nach der Erfindung beispielsweise an einer Schutzgaszuführungsleitung oder an einer damit verbundenen flachen Kühlmittelleitung befestigt und ist in Längsrichtung der Elektrode verstellbar. Dadurch ist eine gleichmäßige Zuführung von Schweißdraht gewährleistet. Die Schweißdrahtzuführung kann aber auch an einer Schutzgasglocke angebracht sein. Sie kann außerdem über ein Federsystem automatisch Bewegungen des Brenners angepaßt werden.

Wie aus der DE-OS 32 20 242 prinzipiell bekannt ist, ist am erfindungsgemäßen Brenner beispielsweise die Elektrodenspitze abgewinkelt und die Elektrode drehbar angeordnet. Beispielsweise trägt die Elektrode an dem der Elektrodenspitze abgekehrten Ende eine Antriebsscheibe, an der eine Motorbetätigung angreift. Mit dieser Konstruktion wird eine genauere Führung des Lichtbogens über die Breite der Schweißnaht ermöglicht, um Bindefehler an den Nahtwänden zu vermeiden. Auch während des Schweißvorganges kann eine Verstellung vorgenommen werden.

Für unterschiedliche Nahtbreiten, die sich aus einer Schrägung der Nahtwände ergeben, kann man eine Verstellbarkeit der Exzentrizität vorsehen, mit der die Antriebsscheibe für eine Schwenkbewegung betätigt wird.

Die Schutzgaszuführungsleitungen sind beispielsweise mit auswechselbaren Düsen ausgestattet. Durch die Auswahl geeigneter Düsen ist eine optimale Anpassung des Schutzgasstromes an die Bauteilgeometrie gegeben. Die Düsen sind beispielsweise parallel zum Nahtgrund der Schweißnaht verlaufend angeordnet. Dadurch wird das Schutzgas direkt an den Lichtbogen der Elektrode herangebracht. Mit der Anordnung der Düsen und durch die jeweilige Auswahl einer geeigneten Düse wird der Vorteil erzielt, daß das den Lichtbogen abdeckende Gas ohne große Wirbel weitgehend laminar strömt. Dadurch wird der Schutzgasverbrauch herabgesetzt.

Die Elektrode ist in der Regel gegen das Kühlsystem elektrisch isoliert. Dadurch wird eine Zündung der relativ schmalen Elektrode mit Hochfrequenz erst möglich. Durch die Isolierung ist gewährleistet, daß nur die Elektrodenspitze brennt und ein Überschlag auf andere Teile des Brenners ausgeschlossen ist.

Um einen Hochfrequenzüberschlag zu verhindern, ist beispielsweise das gesamte, die Elektrode umgebende Schwert des Brenners beschichtet. Der hitzebeständige Lackauftrag kann Glimmer enthalten.

Beispielsweise ist der erfindungsgemäße Brenner mit einer Schutzgasglocke ausgerüstet, die die Schweißnaht überdeckt. Die Schutzgasglocke ist mit einer Wasserkühlung zur Verringerung der Schutzgastemperatur versehen und weist ein Sichtfenster auf. Damit wird der Vorteil erzielt, daß wenig Schutzgas verbraucht wird. Die Glocke ist besonders wirksam, wenn die Tiefe des Spaltes, in dem geschweißt werden soll, gering ist. Zur Anpassung an unterschiedliche Spalttiefen ist die Glocke in Längsrichtung der Elektrode verschiebbar. Dadurch bleibt gegenüber dem Werkstück stets nur eine schmale Öffnung, durch die Schutzgas entweicht.

Falls die Glocke aus einem Material besteht, das Licht und UV-Strahlen absorbiert, werden die Belastungen des Schweißens wesentlich verringert.

Nach einem weiteren Beispiel ist im erfindungsgemäßen Brenner zwischen den Schutzgaszuführungsleitungen und der Elektrode eine Führung für den Einschub eines Endoskops oder einer Glasfaseroptik sowie einer Beleuchtung angeordnet. Über das Endoskop, das ein System optischer Linsen enthält, oder über die Glasfaseroptik wird der Schweißvorgang beobachtet. Dazu kann ein Bildschirm verwendet werden. Mit den Beobachtungsmöglichkeiten wird die Qualität der Schweißnähte erheblich verbessert. Die außerdem angeordnete Beleuchtung gestattet es, die Elektrodenspitze bei ausgeschaltetem Brenner im dunklen Spalt exakt zu positionieren, was die Qualität der nachfolgenden Schweißung steigert.

Die zur Isolierung der Umgebung der Elektrode verwendete Isolierkappe ist beispielsweise ein hitzebeständiger Keramikschuh.

Mit der Erfindung wird insbesondere der Vorteil erzielt, daß in sehr engen Spalten zwischen zwei Rohrleitungsenden mit kleinem Durchmesser Schweißungen mit hoher Genauigkeit und Zuverlässigkeit einfach und schnell auszuführen sind.

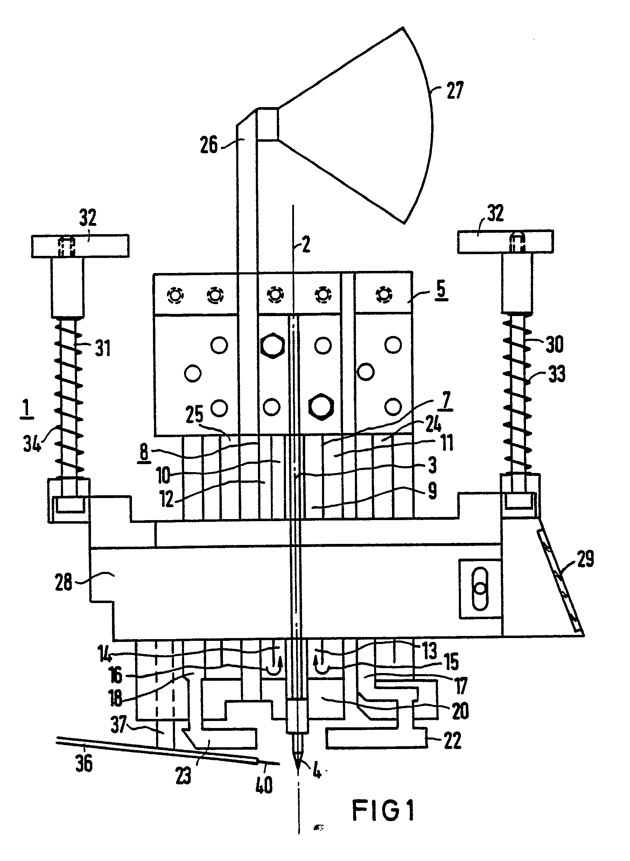

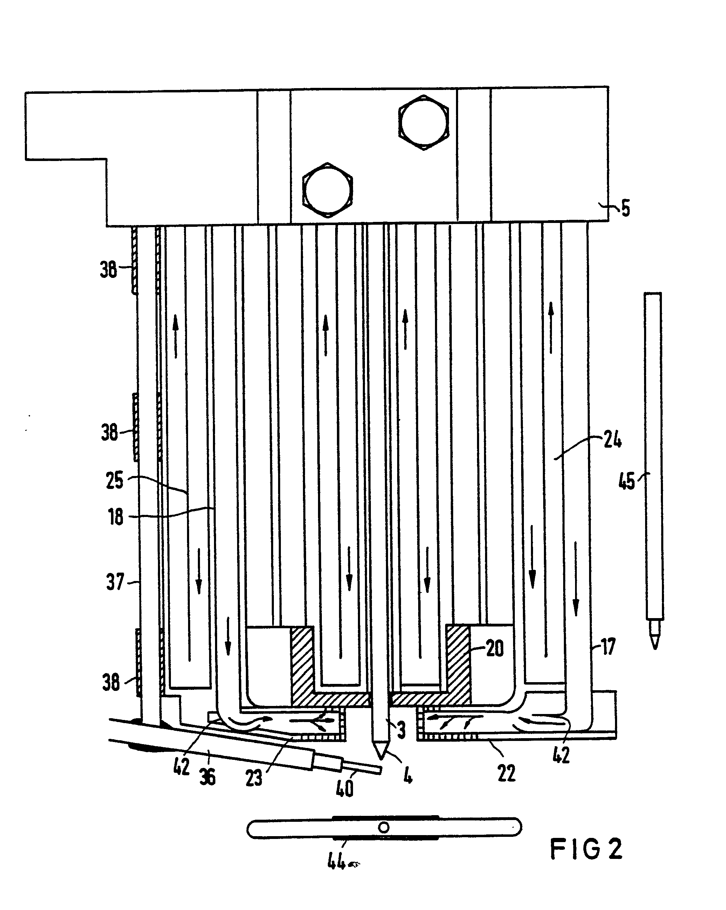

Zur näheren Erläuterung der Erfindung wird anhand der beiliegenden Zeichnung ein Ausführungsbeispiel beschrieben, das in Fig. 1 in einer Seitenansicht in vergrößertem Maßstab dargestellt ist. Die Fig. 2 zeigt weitere Einzelheiten zum Teil im Schnitt in noch größerem Maßstab sowie zugeordnete Darstellungen der wahren Größenabmessungen.

Der als Ganzes mit 1 bezeichnete Brenner ist für den Anbau an jedes handelsübliche WIG-Gerät geeignet, insbesondere für die mechanisierte Schweißung mit sogenannten Orbitalköpfen. Der Brenner 1 ist weitgehend symmetrisch zu der strichpunktierten Achse 2 aufgebaut, die durch eine stabförmige Wolframelektrode 3 verläuft. Die Elektrode 3 hat von ihrer Spitze 4 bis zu ihrer Befestigung in einem Klemmblock 5 eine Länge von z. B. 85 mm und einen Durchmesser von 4 mm.

Die Elektrode 3 steht in gut wärmeleitender Verbindung mit zwei Kühlkörpern 7 und 8, die auf gegenüberliegenden Seiten der Elektrode 3 angeordnet sind. Die Kühlkörper 7 und 8 sind 4 mm dicke Kupferleisten und enthalten jeweils zwei eingefräste Kühlmittelkanäle 9 und 10, die U-förmig als Zuleitungen 11 und 12 zur Elektrodenspitze 4 und als Ableitungen 13 und 14 von der Elektrodenspitze 4 zum Klemmblock 5 verlaufen, wie die Pfeile 15, 16 zeigen. Als Kühlmittel wird Wasser verwendet.

In einer Ebene mit den Kühlkörpern 7 und 8 sind an deren der Elektrode 3 abgekehrten Seite zwei Schutzgaszuführungsleitungen 17 und 18 vorgesehen. Sie verlaufen parallel zur Elektrode 3 bis in den Bereich einer Isolierkappe 20, die über die freien Enden der Kühlkörper 7 und 8 gestülpt ist. Die der Elektrodenspitze 4 und damit der Naht zugekehrten Enden der Schutzgaszuführungsleitungen 17 und 18 besitzen jeweils einen abgewinkelten Bereich 22 und 23, der parallel zum Nahtgrund verläuft. Dieser Bereich ist als Düsenkörper ausgebildet und mit Auslaßöffnungen für das Schutzgas versehen. Die Düsenkörper 22, 23 sind vorteilhaft auswechselbar.

Mit den Schutzgaszuführungsleitungen 17 und 18 sind zwei weitere flache Kühlmittelleitungen 24 und 25 verbunden, die ebenfalls als Kupferleisten mit eingefrästen Nuten und einer Deckplatte ausgebildet sein können. Sie liegen zwischen der Elektrode 3 und den Schutzgaszuführungsleitungen 17, 18, so daß eine thermische Abschirmung bewirkt wird. Die flachen Kühlmittelleitungen 24, 25 sind über isolierende Steckverbindungen mit den Spannung führenden Kühlkörpern 7 und 8 verbunden. Der damit geschaffene Zwischenraum wird für die Aufnahme eines Sichtgerätes 26 genutzt, das in Form eines Endoskops, einer Glasfaseroptik oder dergleichen eine Beobachtung der Schweißnaht in der Nähe der Elektrodenspitze 4 ermöglicht. Mit dem Sichtgerät kann zum Beispiel eine Mattscheibe 27 verbunden sein.

Über den Brenner 1 mit der Elektrode 3 und ihre Kühlkörper 7 und 8 sowie die Schutzgaszuführungsleitungen 17, 18 erstreckt sich eine Schutzgasglocke 28, die an der in der Fig. 1 rechten Seite einen Bereich 29 aus glasklarem Mineralstoff als Sichtfenster besitzt. Die Schutzgasglocke dient unter anderem als thermischer Schild und als Strahlungsabschirmung und ist mit einer nicht weiter dargestellten Wasserkühlung versehen. Damit wird auch die Temperatur des Schutzgases verringert. Um das Abströmen des Schutzgases zu behindern, soll die Glocke 28 möglichst dicht auf dem zu schweißenden Werkstück aufsitzen. Dazu kann sie auf zwei Schrauben 30 und 31 befestigt sein, die in einem Rahmen 32 sitzen, und zwar entgegen der Wirkung von Federn 33 und 34, die die Glocke 28 in Richtung auf die Elektrodenspitze 4 drücken.

Mit der Schutzgasglocke 28 ist auf der der Elektrode 3 abgekehrten Seite der Schutzgasleitung 18 ein Führungsrohr 36 mit einem Haltestab 37 befestigt, der in einem Lagerkörper 38 sitzt. Das Führungsrohr 36 dient zur Zuführung von Zusatzmaterial 40, das als Schweißdraht in den Bereich der Elektrodenspitze 4 geführt wird.

Die Fig. 2 läßt mit ihrem größeren Maßstab deutlich erkennen, daß die abgewinkelten Bereiche 22 und 23 als Düsen fein verteilte Auslaßöffnungen und Strömungsführungen 42 besitzen, damit sich eine möglichst laminare Strömung des Schutzgases einstellt.

Die wahren Abmessungen des Brenners 1 sind demgegenüber in Fig. 2 bei 44 als Brennerquerschnitt und bei 45 als Seitenansicht dargestellt. Trotz der geringen Abmessungen sind die metallischen Teile des Brenners 1 elektrisch isoliert. Dazu dient ein hitzebeständiger Lackauftrag, der Glimmer enthalten kann, sowie die Isolierkappe 20. Damit ist es möglich, den Lichtbogen zur Elektrodenspitze 4 durch Berührung und/oder durch Hochfrequenz zu zünden.

Die Elektrodenspitze 4 ist beim Ausführungsbeispiel rotationssymmetrisch dargestellt. Sie kann aber zur Anpassung an größere Schweißspaltbreiten auch abgewinkelt sein und zum Beispiel beim Schweißen mit Hilfe eines vorzugsweise einstellbaren Exzenters über die Schweißspaltbreite hin- und hergehend bewegt werden. Dies ist besonders beim Auffüllen von tiefen Schweißspalten günstig, deren obere Lagen auch bei einer geringen Neigung der Spaltwand wesentlich breiter sein müssen als die Lagen an der Wurzel des Schweißspaltes.

## Patentansprüche

1. Brenner (1) zum WIG-Schweißen einer Schweißnaht mit einer stabförmigen Wolframelektrode (3), die eine der Schweißnaht zugekehrte Elektrodenspitze (4) hat, mit einer mit der Elektrode (3) verbundenen Kühlmittelleitung (11 bis 14) in der Form von jeweils zwei nebeneinander liegenden Kanälen (11, 13 ; 12, 14) als Zu- und Ableitung, wobei jeweils ein Paar auf gegenüberliegenden Seiten der Elektrode (3) angeordnet ist, mit einer Schutzgaszuführung (17, 18), wobei an der der Elektrode (3) abgekehrten Seite der Kühlmittelkanäle (11 bis 14) die Schutzgaszuführungsleitungen (17, 18) isoliert befestigt sind, und mit einer Isolierkappe (20), die über der Elektrodenspitze (4) zugekehrte Enden der Kühlmittelkanäle (11 bis 14) greift und durch die die Elektrodenspitze (4) hindurchragt, dadurch gekennzeichnet, daß die Wolframelektrode (3) 2 bis 4 mm dick ist, und daß zwei Kanäle (11, 13) als Zuleitung und Ableitung U-förmig miteinander verbunden eine erste Kühlmittelleitung bildend auf einer Seite der Wolframelektrode (3) bis an die Elektrodenspitze (4) herangeführt angeordnet sind, daß zwei weitere Kanäle (12, 14) als Zuleitung und Ableitung U-förmig miteinander verbunden eine zweite Kühlmittelleitung bildend in einer von der ersten Kühlmittelleitung und der Wolframelektrode (3) aufgespannten Ebene auf der gegenüberliegenden Seite der Wolframelektrode (3) bis an die Elektrodenspitze (4) herangeführt angeordnet sind, und daß diese Kombination aus Wolframelektrode (3) und Kühlmittelleitungen (11 bis 14) eine flache Gestalt hat mit einer Breite von etwa 5 mm.

2. Brenner (1) zum WIG-Schweißen nach Anspruch 1 mit Schutzgaszuführungsleitungen (17, 18), die im Bereich der Elektrodenspitze (4) enden, dadurch gekennzeichnet, daß mit den Schutzgaszuführungsleitungen (17, 18) flache Kühlmittelleitungen (24, 25) verbunden sind, die mit den Kühlmittelkanälen (9, 10) der Elektrode (3) in einer Ebene liegen.

3. Brenner (1) zum WIG-Schweißen nach den Ansprüchen 1 und 2 mit einer Schweißdrahtzuführung (36), dadurch gekennzeichnet, daß an einer der Schutzgaszuführungsleitungen (17, 18) oder der damit verbundenen flachen Kühlmittelleitungen (24, 25) die Schweißdrahtzuführung (36) in Längsrichtung der Elektrode (3) verstellbar befestigt ist, wodurch der Zuführwinkel des Schweißdrahtes (40) variabel ist.

4. Brenner zum WIG-Schweißen nach Anspruch 1, dadurch gekennzeichnet, daß die Elektrodenspitze (4) abgewinkelt und die Elektrode (3) drehbar angeordnet ist und daß die Elektrode (3) an dem der Elektrodenspitze (4) abgekehrten Ende eine Antriebsscheibe trägt, an der eine Motorbetätigung angreift.

5. Brenner zum WIG-Schweißen nach Anspruch 4, dadurch gekennzeichnet, daß die Antriebsscheibe einen Exzenter für eine Schwenkbewegung umfaßt, wobei die Exzentrizität vorzugsweise einstellbar ist.

6. Brenner zum WIG-Schweißen nach Anspruch 1, dadurch gekennzeichnet, daß die Schutzgaszuführungsleitungen (17, 18) mit auswechselbaren Düsen (22, 23) verbunden sind.

7. Brenner (1) zum WIG-Schweißen einer Schweißnaht mit einer stabförmigen Wolframelektrode (3) nach Anspruch 1, dadurch gekennzeichnet, daß die Elektrode (3) gegen das Kühlsystem elektrisch isoliert ist, so daß die Elektrode (3) mit Hochfrequenz zu zünden ist.

8. Brenner (1) zum WIG-Schweißen einer Schweißnaht mit einer stabförmigen Wolframelektrode (3) nach Anspruch 1, dadurch gekennzeichnet, daß das die Elektrode (3) umgebende Schwert des Brenners (1) beschichtet ist, um einen Hochfrequenzüberschlag zu verhindern.

9. Brenner (1) zum WIG-Schweißen nach Anspruch 1 dadurch gekennzeichnet, daß die Schweißnaht überdeckend eine Schutzgasglocke (28) angeordnet ist, daß die Schutzgasglocke (28) mit einer Wasserkühlung zur Verringerung der Schutzgastemperatur versehen ist und daß die Schutzgasglocke (28) ein Sichtfenster (29) aufweist.

10. Brenner (19) zum WIG-Schweißen nach Anspruch 9, dadurch gekennzeichnet, daß die Schutzgasglocke (28) licht- und UV-strahlungsabsorbierend ist.

11. Brenner (1) zum WIG-Schweißen nach Anspruch 1, dadurch gekennzeichnet, daß zwischen einer Schutzgaszuführungsleitung (17, 18) und der Elektrode (3) eine Führung für den Einschub eines Endoskops (26) oder einer Glasfaseroptik sowie einer Beleuchtung angeordnet ist.

12. Brenner (1) zum WIG-Schweißen nach Anspruch 1, dadurch gekennzeichnet, daß die Isolierkappe (20) ein auswechselbarer, hitzebeständiger Schuh ist.

**Claims**

1. Burner (1) for the tungsten-inert-gas welding of a welding seam with a rod-shaped tungsten electrode (3), which has an electrode tip (4) turned towards the welding seam, with a coolant line (11 to 14), connected with the electrode (3), in each case in the form of two ducts (11, 13 ; 12, 14) lying next to each other as incoming and outgoing line, one pair in each case being arranged on opposite sides of the electrode (3), with a protective gas supply (17, 18), the protective gas supply lines (17, 18) being insulated, secured on to the side of the coolant ducts (11 to 14) which is turned away from the electrode (3), and with an insulating cap (20) which covers over the coolant ducts' (11 to 14) ends, turned towards the electrode tip (4), and through which the electrode tip (4) extends, characterized in that the tungsten electrode (3) is 2 to 4 mm thick, and that two ducts (11, 13) are arranged as incoming line and outgoing line connected with each other in a U-shape, forming a first coolant line on one side of the tungsten electrode (3) brought forward up to the electrode tip (4), that two further ducts (12, 14) are arranged as incoming line and outgoing line, connected with each other in a U-shape, forming a second coolant line on a fixed plane from the first coolant line and the tungsten electrode (3) on the opposite side of the tungsten electrode (3) brought forward up to the electrode tip (4), and that this combination of tungsten electrode (3) and coolant lines (11 to 14) has a flat form with a width of about 5 mm.

2. Burner (1) for tungsten-inert-gas welding according to claim 1 with protective gas supply lines (17, 18) which end in the range of the electrode tip (4), characterized in that flat coolant lines (24, 25) are connected with the protective gas supply lines (17, 18), the former lying on a level with the coolant ducts (9, 10) of the electrode (3).

3. Burner (1) for tungsten-inert-gas welding according to claims 1 and 2 with a supply of welding wire (36), characterized in that the supply of welding wire (36) is secured so that it can be adjusted on to one of the protective gas supply lines (17, 18) or to one of the flat coolant lines (24, 25) connected with them, in the longitudinal direction of the electrode (3), the supply angle of the welding wire (40) being variable.

4. Burner for tungsten-inert-gas welding according to claim 1, characterized in that the electrode tip (4) is bent and the electrode (3) is arranged so that it can be turned and that on the end which is turned away from the electrode tip (4) the electrode (3) carries a driving pulley on to which a motor grips.

5. Burner for tungsten-inert-gas welding according to claim 4, characterized in that the driving pulley embraces an eccentric movement for a swinging motion, the eccentricity preferably being adjustable.

6. Burner for tungsten-inert-gas welding according to claim 1, characterized in that the protective gas supply lines (17, 18) are connected with exchangeable nozzles (22, 23).

7. Burner (1) for the tungsten-inert-gas welding of a welding seam with a rod-shaped tungsten electrode (3) according to claim 1, characterized in that the electrode (3) is electrically insulated against the cooling system, so that the electrode (3) is to be fired with high frequency.

8. Burner (1) for the tungsten-inert-gas welding of a welding seam with a rod-shaped tungsten electrode (3) according to claim 1, characterized in that the burner's (1) sword which surrounds the electrode (3) is coated in order to prevent a high frequency flashover.

9. Burner (1) for tungsten-inert-gas welding according to claim 1, characterized in that covering over the welding seam a protective gas bell (28) is arranged, that the protective gas bell (28) is provided with a water cooling for the reduction of the protective gas tenperature and that the protective gas bell (28) has an inspection window (29).

10. Burner (19) for tungsten-inert-gas welding according to claim 9, characterized in that the protective gas bell (28) is absorptive of light rays and ultraviolet rays.

11. Burner (1) for tungsten-inert-gas welding according to claim 1, characterized in that between a protective gas supply line (17, 18) and the electrode (3) a slideway is arranged for the insertion of an endoscope (26) or a fibre glass optical system as well as an illumination.

12. Burner (1) for tungsten-inert-gas welding according to claim 1, characterized in that the insulating cap (20) is an exchangeable, heat-resistant shoe.

## Revendications

1. Chalumeau (1) pour réaliser le soudage TIG d'un cordon de soudure, comportant une électrode en forme de barreau en tungstène (3) qui possède une pointe (4) tournée vers le cordon de soudure, et une conduite (11 à 14) pour un fluide de refroidissement reliée à l'électrode (3) et se présentant sous la forme respectivement de deux canaux (11, 13 ; 12, 14) disposés côte-à-côte, qui sont utilisés en tant que conduite d'amenée et conduite d'évacuation et disposés par couples respectivement sur des côtés opposés de l'électrode (3), et un système (17, 18) d'alimentation en gaz protecteur, dont les conduites sont fixées, d'une manière isolée, sur le côté des canaux (11 à 14) du fluide de refroidissement, situés à l'opposé de l'électrode (3), et un capot isolant (20), qui s'engage par-dessus les extrémités, tournées vers la pointe (4) de l'électrode, des canaux (11 à 14) du fluide de refroidissement et que traverse la pointe (4) de l'électrode, caractérisé par le fait que l'électrode en tungstène (3) possède une épaisseur comprise entre 2 à 4 mm et que deux canaux (11, 13), formant conduite d'amenée et conduite d'évacuation, et reliés entre eux sous la forme d'un U, sont disposés de manière à former une première conduite du fluide de refroidissement, d'un côté de l'électrode de tungstène (3) en s'étendant jusqu'à la pointe (4) de l'électrode, que deux autres canaux (12, 14), formant conduite d'amenée et conduite d'évacuation, et reliés entre eux sous la forme d'un U, sont disposés de manière à former une seconde conduite du fluide de refroidissement, sur le côté opposé de l'électrode de tungstène (3), dans un plan passant par la première conduite du fluide de refroidissement et l'électrode de tungstène (3), de manière à s'étendre jusqu'au niveau de la pointe (4) de l'électrode, et que cette combinaison formée d'une électrode de tungstène (3) et de conduites (11 à 14) du fluide de refroidissement possède une configuration plane possédant une largeur d'environ 5 mm.

2. Chalumeau (1) pour le soudage TIG suivant la revendication 1, comportant des conduites (17, 18) d'alimentation en gaz protecteur se terminant au voisinage de la pointe (4) de l'électrode, caractérisé par le fait que des conduites plates (24, 25) du fluide de refroidissement, qui sont situées dans un plan conjointement avec les canaux (9, 10) du fluide de refroidissement de l'électrode (3), sont reliées aux conduites (17, 18) d'alimentation en gaz protecteur.

3. Chalumeau (1) pour le soudage TIG suivant les revendications 1 et 2, comportant un système (36) d'amenée du fil de soudage, caractérisé par le fait que le système (36) d'amenée du fil de soudage est fixé de manière à être déplaçable dans la direction longitudinale de l'électrode (3), sur l'une des conduites (17, 18) d'alimentation du gaz protecteur ou bien sur les conduites plates (24, 25) du fluide de refroidissement, qui y sont raccordées, ce qui a pour effet que l'angle d'amenée du fil de soudure (40) est variable.

4. Chalumeau pour le soudage TIG suivant la revendication 1, caractérisé par le fait que la pointe (4) de l'électrode est coudée, que l'électrode (3) est disposée de manière à pouvoir tourner et que l'électrode (3) porte, au niveau de l'extrémité tournée à l'opposé de la pointe (4) de l'électrode, un disque d'entraînement qui est attaqué par un organe d'actionnement à moteur.

5. Chalumeau pour le soudage TIG suivant la revendication 4, caractérisé par le fait que le disque d'entraînement comporte un excentrique permettant un mouvement de pivotement, l'excentricité étant de préférence réglable.

6. Chalumeau pour le soudage TIG suivant la revendication 1, caractérisé par le fait que les conduites (17, 18) d'alimentation en gaz protecteur sont reliées à des buses interchangeables (22, 23).

7. Chalumeau (1) pour réaliser le soudage TIG d'un cordon de soudure à l'aide d'une électrode en forme de barreau en tungstène (3) qui est isolée du point de vue électrique par rapport au système de refroidissement, de sorte que l'électrode (3) doit être amorcée avec une haute fréquence.

8. Chalumeau (1) pour réaliser le soudage TIG d'un cordon de soudure à l'aide d'une électrode en forme de barreau en tungstène (3) suivant la revendication 1, caractérisé par le fait que la semelle du chalumeau (1), entourant l'électrode (3), comporte un revêtement empêchant une décharge disruptive à haute fréquence.

9. Chalumeau (1) pour le soudage TIG suivant la revendication 1, caractérisé par le fait que le cordon de soudure est disposé de manière à être recouvert par une cloche (28) contenant le gaz protecteur, cette cloche (28) comporte un système de refroidissement à eau visant à réduire la température du gaz protecteur et que la cloche (28) contenant le gaz protecteur possède un voyant (29).

10. Chalumeau (1) pour le soudage TIG suivant la revendication 9, caractérisé par le fait que la cloche (28) contenant le gaz protecteur absorbe la lumière et le rayonnement ultraviolet.

11. Chalumeau (1) pour le soudage TIG suivant la revendication 1, caractérisé par le fait qu'un guide pour l'introduction d'un endoscope (26) ou d'un système optique formé d'une fibre de verre ainsi que d'un dispositif d'éclairage est disposé entre la canalisation (17, 18) d'alimentation du gaz protecteur et l'électrode (3).

12. Chalumeau (1) pour le soudage TIG suivant la revendication 1, caractérisé par le fait que le capot isolant (20) est un pot interchangeable, résistant à la chaleur.

FIG 1

FIG 2